## Europäisches Patentamt

## European Patent Office

## Office européen des brevets

(11) Veröffentlichungsnummer: **0 318 709**

**A1**

# (12) EUROPÄISCHE PATENTANMELDUNG

(21) Anmeldenummer: **88118195.2**

(22) Anmeldetag: **02.11.88**

(51) Int. Cl.⁴: **A61C 3/14 , A61C 5/02**

(30) Priorität: **28.11.87 DE 3740474**

(43) Veröffentlichungstag der Anmeldung:
**07.06.89 Patentblatt 89/23**

(84) Benannte Vertragsstaaten:
**AT BE CH DE ES FR GB IT LI NL SE**

(71) Anmelder: **Paetzold, Christoph, Dr.**
**Schienerberg Weg 22**
**D-7990 Friedrichshafen(DE)**

(72) Erfinder: **Paetzold, Christoph, Dr.**
**Schienerberg Weg 22**
**D-7990 Friedrichshafen(DE)**

(74) Vertreter: **Engelhardt, Guido, Dipl.-Ing.**
**Montafonstrasse 35 Postfach 1350**
**D-7990 Friedrichshafen 1(DE)**

(54) **Einrichtung zum Entfernen von frakturierten Zahnwurzeln.**

(57) Zum Entfernen von frakturierten Zahnwurzelresten (4) mittels einer Extraktionsschraube (21) wird nach der Zahnextraktion mittels eines eine Abdruckmasse (13) enthaltenden Abdrucklöffels (11) von der Extraktionsstelle (2) ein Abdruck genommen. Danach wird in den Boden (12) des Abdrucklöffels (11) im Bereich der Extraktionsstelle (2) eine Ausnehmung (14) zur schwenkbaren Halterung eines zumindest teilweise mit einer kugelförmig gekrümmten Außenmantelfläche (16) versehenen Führungsgliedes (15) eingearbeitet. Das Führungsglied (15) wird daraufhin auf die zu entfernende Zahnwurzel (4) ausgerichtet und mit dem Abdrucklöffel (11) starr verbunden. Sodann wird die Extraktionsschraube (21) vorzugsweise in eine Vorbohrung (5) der Zahnwurzel (4) eingeschraubt und mit Hilfe einer Rändelmutter (24) die sich an dem Führungsglied (15) abstützt, verstellt und dadurch die Zahnwurzel (4) extrahiert.

Durch diese Verfahrensweise ist es möglich, auch ein kleines Wurzelstück ohne operativen Eingriff und somit ohne wesentliche Beeinträchtigung des Patienten in kurzer Zeit und sicher aus einer Alveole zu entfernen.

FIG. 3

## Einrichtung zum Entfernen von frakturierten Zahnwurzeln

Die Erfindung bezieht sich auf eine Einrichtung zum Entfernen von frakturierten Zahnwurzeln, insbesondere von Zahnwurzelresten, mittels einer in diese einführbaren Extraktionsschraube.

Durch die DE-PS 686 412 ist eine Vorrichtung zum Ziehen von Zahnwurzeln bekannt, die aus einer Wurzelschraube und einer geschlitzten Grundplatte besteht. Die Wurzelschraube, die einen mit Gewinde versehenen Schaft besitzt wird hierbei in die zu entfernende Wurzel eingeschraubt und diese wird mittels einer sich auf der Grundplatte abstützenden Mutter angehoben. Die Grundplatte liegt dabei auf den der Extraktionsstelle benachbarten Zähnen auf.

Zum Ziehen von nahezu vollständigen und somit großen Zahnwurzeln mag diese Vorrichtung verwendbar sein, abgebrochene in der Alveole verbliebene Wurzelreste können auf diese Weise jedoch nicht entfernt werden, da die Wurzelschraube nach dem Anbohren des Wurzelrestes nicht auf diesen auszurichten ist. Die lose auf die Nachbarzähne aufgelegte Grundplatte wie auch die deren Schlitz durchgreifende Wurzelschraube werden nämlich insbesondere bei einer Behandlung im Oberkiefer leicht verschoben, auch ist der Wurzelrest meist nicht sichtbar, so daß nur durch Zufall die Wurzelschraube in das vorgebohrte Loch einzuführen ist. Bei Anwendung bei dieser bekannten Vorrichtung würde daher ein Zahnwurzelrest meist in die Kieferhöhle abgleiten und müßte operativ entfernt werden.

Zahnwurzelreste werden daher nach der derzeitigen Lehrmethode dadurch entfernt, daß das Zahnfleisch über dem Wurzelrest durchgeschnitten und zurückgeklappt und sodann der freigelegte Kieferknochen über dem Wurzelrest abgetragen wird. Daraufhin wird der freigelegte Zahnwurzelrest vorsichtig entfernt und das Zahnfleisch wird über der Knochenwunde vernäht.

Dieses Verfahren ist nicht substanzerhaltend, vielmehr muß der Patient einen erheblichen Knochenverlust in Kauf nehmen, auch ist die Infektionsgefahr beträchtlich. Oft treten auch starke Wundschmerzen auf.

Aufgabe der Erfindung ist es daher, eine Einrichtung zum Entfernen von frakturierten Zahnwurzeln, insbesondere von Zahnwurzelresten, mittels einer Extraktionsschraube zu schaffen, mittels der es möglich ist, auch ein kleines Wurzelstück ohne operativen Eingriff und somit ohne wesentliche Beeinträchtigung des Patienten in kurzer Zeit und sicher aus einer Alveole zu entfernen. Der dazu erforderliche Geräte- und Arbeitsaufwand soll gering gehalten werden, vor allem soll die Extraktionsschraube stets zuverlässig in den zu entfernenden Wurzelrest eingeführt werden können.

Die Einrichtung, mittels der dies zu erreichen ist, ist gekennzeichnet durch ein Führungsglied, das in dem in einen Abdrucklöffel, der eine elastisch verformbare Abdruckmasse enthält und mittels dem nach einer Zahnextraktion von der Extraktionsstelle ein Abdruck zu nehmen ist, einzusetzenden Bereich zur verschwenkbaren Halterung eine halbkugelförmig ausgebildete Außenmantelfläche aufweist oder kugelabschnittförmig ausgebildet, mit einer zentrischen Bohrung zur Führung eines Vorbohrers, einer Extraktionsschraube und/oder des optoelektronischen Suchstabes versehen und das nach dem Ausrichten auf die zu entfernende Zahnwurzel mit dem Abdrucklöffel starr verbindbar ist.

Zweckmäßig ist es hierbei, vor dem Einsetzen des Führungsgliedes in die Ausnehmung des Abdrucklöffels diesen im Bereich der in die zu entfernende Wurzel enthaltende Alveole etwa bis in Höhe des Führungsgliedes freizusparen, so daß das Führungsglied verschwenkt und auf die zu entfernende Zahnwurzel ausgerichtet werden kann.

Zur Arretierung des Führungsgliedes ist es angebracht, dieses und/oder die Wandung der Ausnehmung vor dem Einsetzen des Führungsgliedes ganz oder teilweise mit einem Verbindungsmittel, vorzugsweise mit einem unter Lichteinwirkung härtenden Kunststoff, zu bestreichen.

Nach dem Ausrichten des Vorbohrers, der Extraktionsschraube und/oder des Suchstabes kann das Führungsglied durch Aktivieren des Verbindungsmittels, durch Anschweißen od dgl. fest mit dem Abdrucklöffel verbunden werden. Angebracht ist es des weiteren, einen Abdrucklöffel aus einem transparenten Kunststoff mit vorzugsweise verstärktem Boden zu verwenden.

Vorteilhaft ist es des weiteren, das Führungsglied oder den Abdrucklöffel mit einer achssenkrecht zu der Führungsbohrung verlaufenden Abstützfläche zu versehen und das Führungsglied mit einem zapfenförmig ausgebildeten Ansatz auszustatten. Des weiteren kann das Führungsglied mit in dessen Außenmantelfläche eingearbeiteten muldenförmigen Vertiefungen, mit einer Riffelung od.dgl. versehen werden, um eine feste Verbindung mit dem Abdrucklöffel zu ermöglichen.

Zweckmäßig ist es ferner, den Vorbohrer, den optoelektronischen Suchstab und die Extraktionsschraube mit einander zugeordneten Kennzeichnungen, beispielsweise in Form von Farbringen od dgl. zu versehen, wobei der Vorbohrer zur Einstellung der Bohrtiefe auch mit einen auf diesen aufgesetzten verschiebbaren Ring od.dgl. ausgestattet sein kann.

Der Vorbohrer kann drehfest mit einer Rändelmutter verbunden oder mit einem Griffstück versehen sein, dagegen sollte die Rändelmutter auf einem Gewinde der Extraktionsschraube aufschraubbar und zum Extrahieren der Wurzel auf dem Führungsglied oder am Abdrucklöffel abgestützt werden.

Mittels der erfindungsgemäßen Einrichtung ist es ohne Schwierigkeiten möglich, auch kleine abgebrochene Zahnwurzelstücke zuverlässig und ohne operativen Eingriff in kurzer Zeit aus einer Alveole zu entfernen. Mit Hilfe des im Abdrucklöffel verschwenkbar gehaltenen Führungsgliedes kann nämlich ein Vorbohrer und/oder eine Extraktionsschraube exakt auf die zu entfernende Zahnwurzel ausgerichtet werden, so daß diese nach dem Arretieren des Führungsgliedes und nach dem zweckmäßigerweise vorzunehmenden Anbohren mit der Extraktionsschraube zielsicher ohne Sichtkontrolle aufzufinden ist. Und bei der Extraktion der Wurzel wird der Extraktionsdruck auf das Gebiß und den Kieferknochen verteilt, eine Schädigung der Nachbarzähne oder des Alveolenknochens durch Druckbelastung tritt somit nicht ein. Vor allem aber ist es für den Patienten von Vorteil, daß keine operative Behandlung vorzunehmen ist und daß somit auch Schmerzen schwerlich zu registrieren sind. Außerdem ist die Infektionsgefahr auf ein Minimum reduziert.

In der Zeichnung ist die Einrichtung zum Entfernen einer frakturierten Zahnwurzel in unterschiedlichen Verfahrensabschnitten dargestellt. Hierbei zeigt:

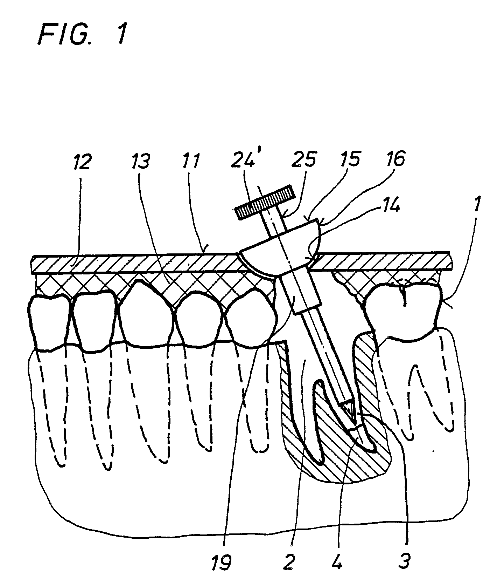

Figur 1 ein in einem Abdrucklöffel eingesetztes Führungsglied mit einem Vorbohrer zum Anbohren eines Zahnwurzelrestes in einem Längsschnitt,

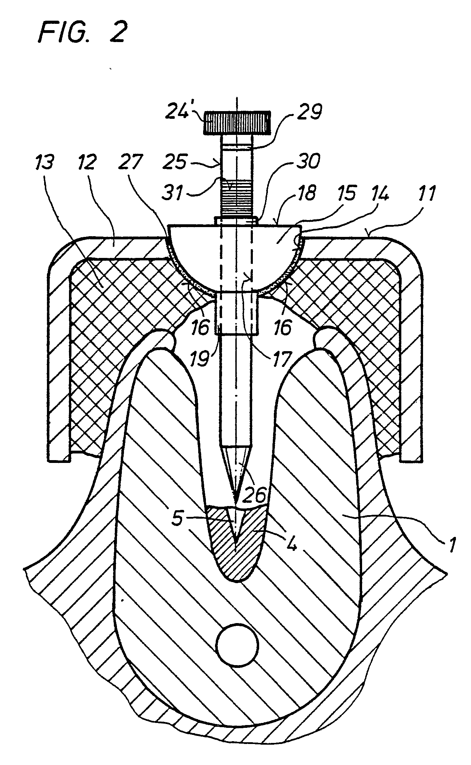

Figur 2 den Abdrucklöffel nach Figur 1 in einem achssenkrechten Schnitt und

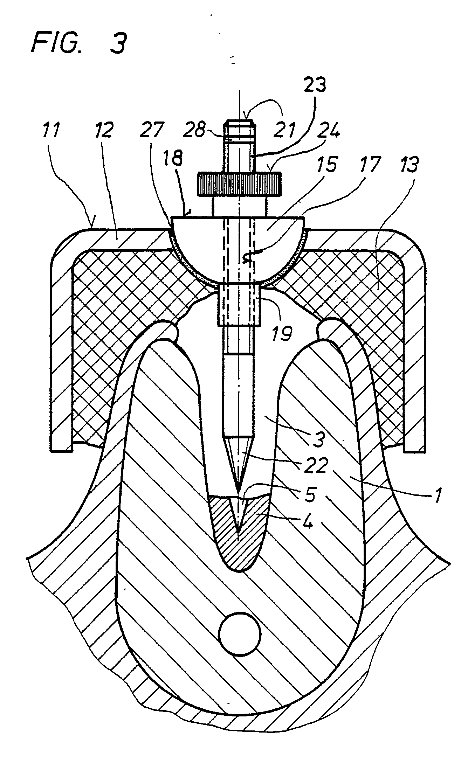

Figur 3 den Abdrucklöffel nach Figur 1 mit in dem Führungsglied eingesetzter Extraktionsschraube, ebenfalls in einem achssenkrechten Schnitt.

Die Einrichtung zum Entfernen eines sich in einer Alveole 3 eines Unterkieferknochens 1 befindenden Wurzelrestes 4 besteht im wesentlichen aus einem Abdrucklöffel 11, einem Führungsglied 15 sowie einem Vorbohrer 25 und/oder einer Extraktionsschraube 21. Das Führungsglied 15 ist hierbei mit einer halbkugelförmig ausgebildeten Außenmantelfläche 16 und einer Führungsbohrung 17 für die Extraktionsschraube 21 und den Vorbohrer 25 versehen und in einer entsprechend gestalteten in den Boden 12 des Abdrucklöffels 11 und ggf. auch in die elastisch verformbare Abdruckmasse 13, die dieser enthält, eingearbeiteten Ausnehmung 14 eingesetzt. Außerdem weist das Führungsglied 15 eine achssenkrecht zu der Führungsbohrung 17 verlaufende Abstützfläche 18 für eine Rändelmutter 24 auf, die auf einem Gewinde 23 der Extraktionsschraube 21 aufschraubbar ist. Des weiteren kann das Führungsglied 15 in Verlängerung der Führungsbohrung 17 mit einem zapfenförmigen Ansatz 19 versehen sein.

Um den frakturierten Zahnwurzelrest 4 zuverlässig entfernen zu können, ist nach der Zahnextraktion mittels des Abdrucklöffels 11 von der Extraktionsstelle 2 im Unterkiefer 1 ein Abdruck zu nehmen. Nach dem Entfernen des Abdrucklöffels 11 aus dem Mund des Patienten wird in den Boden 12, der verstärkt ausgebildet ist und zweckmäßigerweise aus einem transparentem Kunststoff besteht, die Ausnehmung 14 zur Aufnahme des Führungsgliedes 15 mit einem entsprechend gestalteten Werkzeug eingearbeitet. Außerdem wird der Abdrucklöffel 11 im Bereich des zu entfernenden Zahnwurzelrestes 4 derart freigespart, daß das Führungsglied 15 in der Ausnehmung 14 verschwenkt und auf den Zahnwurzelrest 4 ausgerichtet werden kann.

Nach dem Reponieren des Abdrucklöffels 11 in den Mund wird sodann das Führungsglied 15 mit Hilfe des Vorbohrers 25 oder der Extraktionsschraube 21 auf den Zahnwurzelrest 4 ausgerichtet, indem dieser beispielsweise angebohrt wird. Danach wird mit Hilfe eines Verbindungsmittels 27 das Führungsglied 15 fest mit dem Abdrucklöffel 11 verbunden. Zweckmäßig ist es hierbei, die Lage des Vorbohrers 25 und/oder der Extraktionsschraube 21 durch eine Röntgenaufnahme zu überprüfen und als Verbindungsmittel einen Kunststoff auf die Außenmantelfläche 16 des Führungsgliedes 15 und/oder die Innenfläche der Ausnehmung 14 aufzutragen, der unter Lichteinwirkung aushärtet. Die Arretierung des Führungsgliedes 15 kann somit im Mund vorgenommen werden. Selbstverständlich kann das Führungsglied 15 aber auch mit dem Abdrucklöffel 11 mit Hilfe einer Elektroschlinge im Mund des Patienten verschweißt oder auf andere Weise fest verbunden werden.

Nunmehr kann mit der Spitze 26 des mit einer fest angebrachten Rändelmutter 24' versehenen Vorbohrers 25 in den Zahnwurzelrest 4 eine Vorbohrung 5 eingearbeitet werden, in die nachfolgend die Spitze 22 der Extraktionsschraube 21 mit Hilfe des Führungsgliedes 15 zielsicher ohne Sichtkontrolle eingesetzt wird. Wird daraufhin die Rändelmutter 24 auf dem Gewinde 23 der Extraktionsschraube 21 aufgeschraubt, so wird, sobald die Rändelmutter 24 auf der Abstützfläche 18 des Führungsgliedes 15 aufliegt, die Extraktionsschraube 21 in Achsrichtung verstellt und dadurch wird der mit dieser verbundene Zahnwurzelrest 4 entfernt.

Die Extraktionsschraube 21 und der Vorbohrer 25 sind aufeinander abgestimmt und mit entsprechenden Kennzeichnungen, wie beispielsweise mit Farbringen 28 und 29, ausgestattet. Auch ist es zweckmäßig, den Vorbohrer 25 mit einem verstellbaren Ring 30 und mit einer Skalierung 31 zu versehen, um die Tiefe der Vorbohrung 5 leicht einstellen zu können.

Zum Vorbohren und Extrahieren einer Zahnwurzel kann selbstverständlich auch ein kombiniertes Gerät, das die entsprechenden Funktionen aufweist, verwendet werden, auch ist es möglich, die Extraktion einer Zahnwurzel ausschließlich mit Hilfe des ausgerichteten Führungsgliedes 15 und der Extraktionsschraube 21 vorzunehmen. Zum Auffinden eines Zahnwurzelrestes und/oder Ausrichten des Führungsgliedes 15 eignete sich auch ein optoelektronischer Suchstab, der durch die Führungsbohrung 16 des Führungsgliedes 15 in die Alveole 3 einzuführen ist.

**Ansprüche**

1. Einrichtung zum Entfernen von frakturierten Zahnwurzeln, insbesondere von Zahnwurzelresten, mittels einer in diese einführbaren Extraktionsschraube,
**gekennzeichnet,**
durch ein Führungsglied (15) das in dem in einen Abdrucklöffel (11,) der eine elastisch verformbare Abdruckmasse (13) enthält und mittels dem nach einer Zahnextraktion von der Extraktionsstelle (2) ein Abdruck zu nehmen ist, einzusetzenden Bereich zur verschwenkbaren Halterung eine halbkugelförmig ausgebildete Außenmantelfläche (16) aufweist oder kugelabschnittförmig ausgebildet, mit einer zentrischen Bohrung (17) zur Führung eines Vorbohrers (25,) einer Extraktionsschraube (21) und/oder des optoelektronischen Suchstabes versehen und das nach dem Ausrichten auf die zu entfernende Zahnwurzel (4) mit dem Abdrucklöffel (11) starr verbindbar ist.

2. Einrichtung nach Anspruch 1,
**dadurch gekennzeichnet,**
daß der Abdrucklöffel (11) vor dem Einsetzen des Führungsgliedes (15) in die Ausnehmung (14) im Bereich der die zu entfernende Zahnwurzel (4) enthaltende Alveole (3) etwa bis in Höhe des Führungsgliedes (15) freigespart ist.

3. Einrichtung nach Anspruch 1 oder 2,
**dadurch gekennzeichnet,**
daß zur Arretierung des Führungsgliedes (15) dieses und/oder die Wandung der Ausnehmung (14) vor dem Einsetzen des Führungsgliedes (15) ganz oder teilweise mit einem Verbindungsmittel (27), vorzugsweise mit einem unter Lichteinwirkung härtenden Kunststoff, versehen ist.

4. Einrichtung nach Anspruch 3,
**dadurch gekennzeichnet,**
daß das Führungsglied (15) nach dem Ausrichten des Vorbohrers (25) der Extraktionsschraube (21) und/ oder des Suchstabes durch Aktivieren des Verbindungsmittels (27) durch Anschweißen oder dgl. fest mit dem Abdrucklöffel (11) verbunden ist.

5. Einrichtung nach einem oder mehreren der Ansprüche 1 bis 4,
**dadurch gekennzeichnet,**
daß der Abdrucklöffel (11) aus einem transparenten Kunststoff mit vorzugsweise verstärktem Boden (12) hergestellt ist.

6. Einrichtung nach einem oder mehreren der Ansprüche 1 bis 5,
**dadurch gekennzeichnet,**
daß das Führungsglied (15) oder der Abdrucklöffel (11) mit einer achssenkrecht zu der Führungsbohrung (17) verlaufenden Abstützfläche (18) versehen sind.

7. Einrichtung nach einem oder mehreren der> Ansprüche 1 bis 6,
**dadurch gekennzeichnet,**
daß das Führungsglied (15) mit einem zapfenförmig ausgebildeten Ansatz (19) versehen ist.

8. Einrichtung nach einem oder mehreren der Ansprüche 1 bis 7,
**dadurch gekennzeichnet,**
daß das Führungsglied (15) mit in dessen Außenmantelfläche (16) eingearbeiteten muldenförmigen Vertiefungen, mit einer Riffelung oder dgl. versehen ist.

9. Einrichtung nach einem oder mehreren der Ansprüche 1 bis 8,
**dadurch gekennzeichnet,**
daß der Vorbohrer (25,) der optoelektronische Suchstab und die Extraktionsschraube (21) mit einander zugeordneten Kennzeichnungen beispielsweise in Form von Farbringen (28, 29), versehen sind.

10. Einrichtung nach einem oder mehreren der Ansprüche 1 bis 9,
**dadurch gekennzeichnet,**
daß der Vorbohrer (25) zur Einstellung der Bohrtiefe mit einem auf diesen aufgesetzten verschiebbaren Ring (30) versehen ist.

11. Einrichtung nach einem oder mehreren der Ansprüche 1 bis 10,
**dadurch gekennzeichnet,**
daß der Vorbohrer (25) drehfest mit einer Rändelmutter (24) verbindbar oder mit einem Griffstück versehen ist.

I2. Einrichtung nach einem oder mehreren der Ansprüche 1 bis 11,
**dadurch gekennzeichnet,**
daß die Rändelmutter (24´) auf einem Gewinde (23) der Extra ktionsschraube (21) aufschraubbar und zum Extrahieren der Wurzel (4) auf dem Führungsglied (15) oder am Abdrucklöffel (11) abstützbar ist.

FIG. 1

FIG. 2

FIG. 3

**Europäisches Patentamt**

Nummer der Anmeldung

EP 88 11 8195

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-C- 686 412 (P. VAN BEEK) <br> --- | | A 61 C 3/14 <br> A 61 C 5/02 |
| A | DE-B-1 013 392 (H. ACKERMANN) <br> ----- | | |
| | | | **RECHERCHIERTE SACHGEBIETE (Int. Cl.4)** |
| | | | A 61 C |

Der vorliegende Recherchenbericht wurde für alle Patentansprüche erstellt

| Recherchenort | Abschlußdatum der Recherche | Prüfer |
|---|---|---|
| DEN HAAG | 06-03-1989 | VANRUNXT J.M.A. |

EPO FORM 1503 03.82 (P0403)